Europäisches Patentamt

European Patent Office

Office européen des brevets

(11) Veröffentlichungsnummer: **0 358 986**
**A1**

## (12) EUROPÄISCHE PATENTANMELDUNG

(21) Anmeldenummer: **89115514.5**

(22) Anmeldetag: **23.08.89**

(51) Int. Cl.5 **C05F 17/02 , B65G 65/06**

(30) Priorität: **23.08.88 DE 8810644 U**

(43) Veröffentlichungstag der Anmeldung:
**21.03.90 Patentblatt 90/12**

(84) Benannte Vertragsstaaten:
**AT BE CH DE ES FR GB IT LI NL SE**

(71) Anmelder: **Willibald, Josef**
**Frickinger Strasse 97**
**D-7771 Frickingen 2 Altheim(DE)**

(72) Erfinder: **Willibald, Josef**
**Frickinger Strasse 97**
**D-7771 Frickingen 2 Altheim(DE)**

(74) Vertreter: **Seemann, Norbert W.**
**Brehmstrasse 37**
**D-7320 Göppingen(DE)**

(54) **Kompostumsetzvorrichtung.**

㉗ Ein Kompostumsetzgerät besteht aus einem um zwei vertikale Drehachsen ( 1a ) umlaufend angetriebenen Band ( 1 ), das auf seiner Oberfläche mit Fräswerkzeugen ( 2 ) besetzt ist. Seitlich zu dem Fräsband ( 1, 2 ) ist ein schwenkbarer Schrägförderer ( 4 ) angeordnet, der das vom Band ( 1 ) von einer Kompostmiete stirnseitig abgefräste Material, seitlich versetzt zu einer neuen Miete aufschüttet.

Fig.1.

EP 0 358 986 A1

# Kompostumsetzvorrichtung

Die Erfindung bezieht sich auf eine Vorrichtung nach dem Oberbegriff des Hauptanspruchs.

Bekannt sind derartige Kompostumsetzgeräte beispielsweise aus der DE-OS 37 24 685 und zwar in der Form, daß mittels eines um eine horizontale Achse rotierenden, mit Förderschaufeln besetzten Schleuderrades die jeweilige Miete stirnseitig angefahren, abgefräst und dabei zugleich seitlich versetzt wird. Als Nachteil dieser Ausführung haben sich in der Praxis vor allem Materialstauungen und Verstopfungen im bodenseitigen Mietenbereich gezeigt, resultierend aus den dort zwangsläufig durch die Kreisform des Schleuderrades beidseits desselben am zumeist trapezförmigen Mietengrund verbleibenden Materialzonen, ein zudem unkontrollierter seitlicher Materialabwurf am oberen Schleuderradbereich sowie Materialverdichtungen anstatt Lockerung durch den Abwurf selbst.

Die vorliegende Erfindung hat deshalb die Aufgabe, durch geeignete Mittel und Maßnahmen baulicher sowie anordnungstechnischer Art die eingangs geschilderten Nachteile bekannter Vorrichtungen durch ein neuartiges schonendes Abtragsystem zu beseitigen; letzteres ist im folgenden anhand eines Ausführungsbeispiels näher beschrieben. Die zugehörige Zeichnung zeigt als Systemskizze in rein schematischer Darstellung in

Fig. 1 eine Vorderansicht auf das neue Umsetzgerät,

Fig. 2 eine Seitenansicht zu fig. 1,

Fig. 3 eine Draufsicht zu Fig. 1 und

Fig. 4 eine vergrößerte Darstellung der Einzelheit "A" aus Fig. 2.

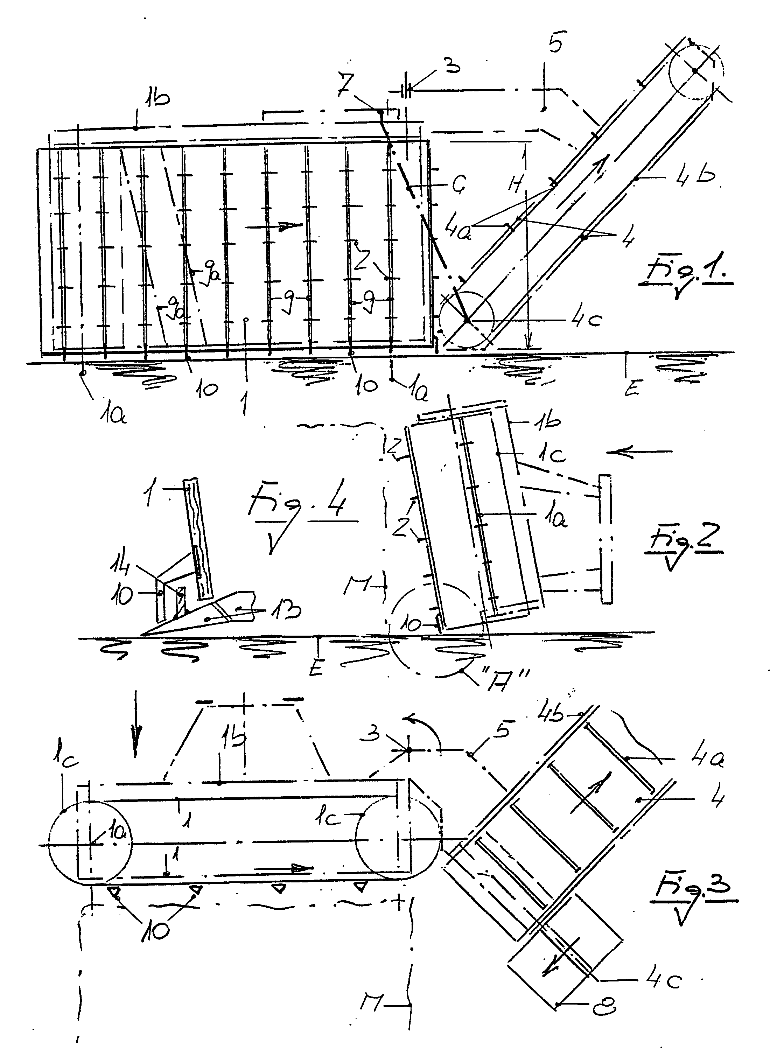

Aus den Darstellungen der Fig. 1 bis 3 ist zunächst generell als neue Bauform ersichtlich, ein um zwei vertikale Achsen 1a umlaufendes, flexibles Fräsband 1, etwa in seiner Höhe "H" der abzutragenden Miete "M" entsprechend und auf seiner Oberfläche mit waagerecht liegenden messerartigen Förder- und Nachzerkleinerungswerkzeugen 2 besetzt; weiterhin ersieht man ein seitlich zum Fräsband 1, 1a angeordneter, über ein Gelenk 3 o. ä. schwenkbarer Schrägförderer 4, besetzt mit Förderleisten 4a o.dgl. und mit seinem Rahmen 4b vorzugsweise über Schwenkarme 5 mit dem Tragrahmen 1b des Fräsbandes 1 über das Gelenk 3 verbunden. Angedeutet zudem ist hier noch als Beispiel eine Antriebskopplung beider Geräteteile 1 und 4 mittels Gelenkwelle 6 o. ä. von einem Hauptgetriebe 7 aus ; möglich ist natürlich auch die Verwendung separater Hydraulikmotoren für Fräsband 1 und Schrägförderer 4. Diese neue Anordnung fräst nun auch den Fuß der trapezförmigen Mieten von deren Stirnseite her schonend und exakt zum Schrägförderer hin ab und letzterer garantiert die schonende seitliche Aufschichtung einer neuen, belüfteten Miete oder das Beladen eines Fahrzeugs bei fertigem Kompost. Denkbar bei dieser Bauform ist jedoch auch ein Ersatz des Schrägförderers 4 durch mindestens ein Schleuderrad mit aufsteigendem Auswurfkanal.

Ein insbesondere aus Fig. 3 zu ersehendes, seitlich zum Schrägförderer 4 vorzugsweise auf gleicher Drehachse 4c angeordnetes Flügelrad 8 als zusätzliches Räumorgan sorgt zudem dafür, das alles vom Fräsband 1 zum Schrägförderer 4 hin geworfene Material auf letzteren gelangt und die Fahrspur zwischen der alten und neuen Miete frei bleibt. Dies ist insbesondere dann wichtig, wenn das neue Gerät im Heckenanbau an einer Zugmaschine gefahren wird, denn der Heckanbau hat gegenüber dem Frontanbau den Vorteil der besseren Sicht auf die Miete für den Schlepperfahrer.

In spezieller Ausgestaltung der zuvor beschriebenen, generellen Bauform ist nun noch vorgesehen, daß die Fräsmesser 2 auf Leisten 9, 9a sitzen und einzeln oder mit diesen als Ganzes vom Fräsband 1 abnehmbar sind;dies erleichtert den Austausch abgenutzter oder beschädigter Messer, während das weitere neue Merkmal, daß die Leisten 9a schräg zur Bandoberfläche 1 angeordnet sind und aus flexiblem Material bzw. aneinandergereihten Teilstücken bestehen die Flexibilität, des Bandes 1 erhält und für eine gute Kraftverteilung am Band 1 sorgt.

Für eine einwandfreie Funktion des neuen Gerätes ist es zudem von großer Wichtigkeit, daß das Fräsband 1 leicht nach vorne geneigt gegen den Boden "E" bzw. die Miete "M" angestellt sowie die Befestigungsmuttern für die Leisten 9 bzw. 9a in das Band eingegossen o. ä. eingearbeitet sind und das Fräsband 1 in seinem Rahmen 1b über Führungsrollen gehalten bzw. abgestützt ist; letztere sind hierbei nicht gesondert dargestellt.

Einer sauberen Räumarbeit dient es zudem noch, wenn an den bodenseitigen Enden der die Fräsmesser 2 tragenden Leisten 9 bzw. 9a zum Erdboden "E" hin gerichtete, steg- oder hakenartige Räumwerkzeuge 10 angeordnet sind incl. der Zuordnung von Abstreifern 12 zu den Fräsmessern 2 im Bereich zwischen Fräsband 1 und Schrägförderer 4; eine separate Abstützung der Rahmen 1b und 4b beider Geräteteile 1 und 4 zur Bodenanpassung über Laufräder bzw. Kufen 13 o.dgl. und ggf. für extrem hohe Mieten die Möglichkeit der Zuordnung eines gesonderten Fräsaufsatzes oberhalb des Bandes 1 vervollständigen die vorliegende Erfindung, wobei es letztlich wie Fig. 4 zeigt noch wichtig ist, daß sich die Kufe 13 über die gesamte vordere Bandbreite erstreckt, etwa von Achse 1a zu Achse 1a, und zwischen Bandvorderkante 1 und Räumwerkzeugen 10 auf der Kufe 13 ein etwa gleichlanger Steg 14 sitzt; hierdurch wird einmal eine exakte Führung des Gesamtgerätes sowie Tiefenbegrenzung desselben gewährleistet und zum anderen durch den Steg 14 verhindert, daß Kompost u.dgl. ins Bandinnere und zu den Führungstrommeln 1c gelangt. Auch könnte letztlich an den Schrägförderer 4 noch ein Sieb mit oder ohne Nachzerkleinerer angeschlossen werden.

Bezugsziffernverzeichnis

1 Fräsband
1a Vertikalachse
1b Tragrahmen
1c Führungstrommel
2 Fräs- und Nachzerkleinerungsmesser
3 Schwenkgelenk
4 Schrägförderer
4a Förderleisten
4b Rahmen
4c Drehachse
5 Schwenkarm
6 Gelenkwelle
7 Hauptgetriebe
8 Flügelrad
9 Messerleisten
10 Räumwerkzeug
11 Dreipunktanbaubock
12 Abstreifer
13 Kufe
14 Steg
E Erdboden
H Bandhöhe
M Miete
F Fahrtrichtung
$F_1$ Förderrichtung
S Schwenkrichtung

Ansprüche

1. Vorrichtung zum Umsetzen von in Mieten aufgeschichtetem Kompost bzw. zur Kompostierung bestimmten Material,
**gekennzeichnet durch:**
a. Ein um vertikale Achsen ( 1a ) umlaufendes, flexibles Fräsband ( 1 ), etwa in seiner Höhe ( H ) der abzutragenden Miete ( M ) entsprechend und auf seiner Oberfläche mit waagerecht liegenden messerartigen Förder- und Nachzerkleinerungswerkzeugen ( 2 ) besetzt.
b. Ein seitlich zum Fräsband ( 1, 1a ) angeordneter, über ein Gelenk ( 3 ) o. ä. schwenkbarer Schrägförderer ( 4 ), besetzt mit Förderleisten ( 4a

) o.dgl. und mit seinem Rahmen ( 4b ) vorzugsweise über Schwenkarme ( 5 ) mit dem Tragrahmen ( 1b ) des Fräsbandes ( 1 ) über das Gelenk ( 3 ) verbunden.
c. Eine Antriebskopplung beider Geräteteile ( 1 und 4 ) mittels Gelenkwelle ( 6 ) o. ä. von einem Hauptgetriebe ( 7 ) aus bzw. mit separaten Hydraulikmotoren versehen.

2. Vorrichtung nach Anspruch 1,
**gekennzeichnet durch**
Ersatz des Schrägförderers ( 4 ) durch mindestens ein Schleuderrad mit aufsteigendem Auswurfkanal ( nicht dargestellt ).

3. Vorrichtung nach den Ansprüchen 1 und 2,
**gekennzeichnet durch**
ein seitlich zum Schrägförderer ( 4 ) vorzugsweise auf gleicher Drehachse ( 4c ) angeordnetes Flügelrad ( 8 ) als zusätzliches Räumorgan.

4. Vorrichtung nach den Ansprüchen 1 bis 3,
**dadurch gekennzeichnet,**
daß die Fräsmesser ( 2 ) auf Leisten ( 9, 9a ) sitzen und einzeln oder mit diesen als Ganzes vom Fräsband ( 1 ) abnehmbar sind.

5. Vorrichtung nach Anspruch 4,
**dadurch gekennzeichnet,**
daß die Leisten ( 9a ) schräg zur Bandoberfläche ( 1 ) angeordnet sind und aus flexiblem Material bzw. aneinandergereihten Teilstücken bestehen.

6. Vorrichtung nach den vorhergehenden Ansprüchen,
**dadurch gekennzeichnet,**
daß das Fräsband ( 1 ) leicht nach vorne geneigt gegen den Boden ( E ) bzw. die Miete ( M ) angestellt ( Fig. 2 ) sowie die Befestigungsmuttern für die Leisten ( 9 bzw. 9a ) in das Band eingegossen o. ä. eingearbeitet sind und das Fräsband ( 1 ) in seinem Rahmen ( 1b ) über Führungsrollen gehalten bzw. abgestützt ist.

7. Vorrichtung nach den vorhergehenden Ansprüchen,
**dadurch gekennzeichnet,**
daß an den bodenseitigen Enden der die Fräsmesser ( 2 ) tragenden Leisten ( 9 bzw. 9a ) zum Erdboden ( E ) hin gerichtete, steg- oder hakenartige Räumwerkzeuge ( 10 ) angeordnet sind.

8. Vorrichtung nach den vorhergehenden Ansprüchen,
**gekennzeichnet durch**
Zuordnung von Abstreifern ( 12 ) zu den Fräsmessern ( 2 ) im Bereich zwischen Fräsband ( 1 ) und Schrägförderer ( 4 ), separate Abstützung der Rahmen ( 1b und 4b ) beider Geräteteile ( 1 und 4 ) zur Bodenanpassung über Laufräder bzw. Kufen ( 13 ) o.dgl. und ggf. für extrem hohe Mieten die Möglichkeit der Zuordnung eines gesonderten Fräsaufsatzes oberhalb des Bandes ( 1 ).

9. Vorrichtung nach Anspruch 8,
**dadurch gekennzeichnet,**

daß sich die Kufe ( 13 ) über die gesamte vordere Bandbreite erstreckt, etwa von Achse ( 1a ) zu Achse ( 1a ), und zwischen Bandvorderkante ( 1 ) und Räumwerkzeugen ( 10 ) auf der Kufe ( 13 ) ein etwa gleichlanger Steg ( 14 ) sitzt.

Fig.1.

Fig.2

Fig.4

Fig.3

Europäisches
Patentamt

**EUROPÄISCHER RECHERCHENBERICHT**

Nummer der Anmeldung

EP 89 11 5514

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-1 499 764 (P.E. DUTCHER) <br> * Seite 1, Zeilen 9-53; Seite 2, Zeilen 122-130; Seite 4, Zeilen 41-47; Seite 4, Zeile 76 - Seite 5, Zeile 35; Seite 5, Zeile 112 - Seite 6, Zeile 11; Figuren 1,2 * <br> --- | 1-9 | C 05 F 17/02 <br> B 65 G 65/06 |
| A | US-A-2 402 976 (U.J. OLSON) <br> * Spalte 1, Zeilen 10-33; Figuren 1,2 * <br> --- | 1-9 | |
| A | EP-A-0 261 097 (A. KAHLBACHER) <br> * Spalte 3, Zeile 17 - Spalte 4, Zeile 59; Spalte 5, Zeilen 22-31; Figuren 11,12 * <br> --- | 1-9 | |
| A | DE-A-2 906 672 (GUSTAN SCHADE MASCHINENFABRIK GmbH & CO.) <br> * Ansprüche * <br> --- | 1-9 | |
| A | US-A-4 410 142 (C.-G.H. CARLSON) <br> ----- | | **RECHERCHIERTE SACHGEBIETE (Int. Cl.5)** <br><br> C 05 F <br> B 65 G <br> E 01 H <br> E 02 F |

Der vorliegende Recherchenbericht wurde für alle Patentansprüche erstellt

| Recherchenort | Abschlußdatum der Recherche | Prüfer |
|---|---|---|
| DEN HAAG | 29-12-1989 | SCHUT,R.J. |